# EUROPEAN PATENT SPECIFICATION

(11) **EP 2 462 364 B1**
(45) Date of publication and mention of the grant of the patent: **30.04.2014**
(21) Application number: 10748140.0
(22) Date of filing: 05.08.2010
(51) Int. Cl.: F16G 1/28, D03D 15/00

(54) **TOOTHED BELT COVERED BY A CLOTH AND DRIVE SYSTEM COMPRISING THE SAME**
MIT EINEM STOFF BEDECKTER ZAHNRIEMEN UND ANTRIEBSSYSTEM DAMIT
COURROIE DENTÉE RECOUVERTE D'UN TISSU ET SYSTÈME D'ENTRAÎNEMENT QUI L'UTILISE

(30) Priority: 06.08.2009 IT TO20090620
(43) Date of publication of application: 13.06.2012
(73) Proprietor: Dayco Europe S.R.L., Chieti (IT)
(72) Inventor: ROLANDO, Adriano, I-10087 Valperga Canavese (IT); DI MECO, Marco, I-65129 Pescara (IT); BALDOVINO, Carlo, I-65125 Pescara (IT)
(74) Representative: Fiussello, Francesco
(86) International application number: PCT/IB2010/001961
(87) International publication number: WO 2011/015945

(56) References cited:
- WO-A1-2009/034422
- WO-A1-2009/034748
- WO-A1-2011/003090
- DE-U1-202004 009 640
- JP-A- 2004 270 066
- JP-A- 2008 190 103
- DORTMANS J: "DIOFORT PPS-BASED HIGH-TENACITY MULTIFILAMENT YARN ALLOWS NEW APPLICATIONS", CHEMICAL FIBERS INTERNATIONAL, IBP INTERNATIONAL BUSINESS PRESS PUBL., FRANKFURT, DE, 1 October 2006 (2006-10-01), page 293/294, XP001500173, ISSN: 0340-3343
- Ticona Unternehmenskommunikation: "Techtextil in Frankfurt am Main", , 12 June 2007 (2007-06-12), pages 1-13, XP002574019, Online Retrieved from the Internet: URL:http://www.ticona-eu.com/de/print/pm_e _ticona-techtextil_07-06-11_be.pdf [retrieved on 2010-03-18]

## Description

### TECHNICAL FIELD

The present invention relates to a toothed drive belt covered by a cloth and to a drive system comprising the same.

### STATE OF THE PRIOR ART

Toothed belts generally comprise an elastomeric body, in which are embedded a plurality of threadlike longitudinal reinforcing inserts also designated as "cords" and a plurality of teeth covered by a cover cloth.

Each component of the belt contributes to increasing the performance in terms of mechanical resistance, so as to decrease the risk of failure of the belt and to increase the specific transmissible power.

Cords especially contribute to ensuring the required mechanical characteristics for the belt and substantially contribute to the modulus of the belt itself and specifically ensure that performance is retained in the course of time. Cords are generally formed by twisting high-modulus fibres several times.

Cords are also normally treated with substances adapted to increase the compatibility of the fibres with the body compound that surrounds the cords themselves.

The body compound allows to connect the various above said elements and ensure that these contribute synergically to the final performance of the belt.

The body compounds contain one or more elastomeric materials possibly enriched with fibres to increase the hardness thereof.

The cover cloth of the belts finally serves to increase the resistance to abrasion and hence protects the working surface of the belt from wear due to rubbing between the sides and the tops of the belt teeth and the sides and the bottoms of the races of the pulley with which the belt interacts.

Furthermore, the cover cloth reduces the coefficient of friction on the working surface, reduces the deformability of the teeth and especially reinforces the root of the tooth thereby avoiding the failure thereof.

In recent engines in which performance is considerably increased, toothed belts are subjected to high temperatures and these temperatures lead to a faster deterioration of the materials forming the various components of the belts.

Furthermore, the belts are often used in oil i.e. in systems in which the belt is inside the block and therefore is in direct contact with oil splashes or even always operates partially immersed in oil. In particular, the materials forming drive belts used in "dry conditions", designed to resist oil only for a short time and at low temperatures, do not allow to avoid a deterioration of the mechanical features at high temperatures and may therefore give rise to broken teeth and accordingly may shorten the average life of the belt.

It is currently known to use cover cloths, in particular for toothed belts, for example having a simple structure consisting of a weft and a warp with weft yarns comprising polyamide fibres or having a composite structure, in which the weft consists of weft yarns each formed by a core elastic yarn and by a pair of composite yarns wound on the elastic yarn, each composite yarn comprises a high thermal and mechanical resistance yarn and at least one covering yarn wound on the high thermal and mechanical resistance yarn. The elastic yarn is made e.g. of polyurethane. The high thermal and mechanical resistance yarn is made e.g. of para-aromatic polyamide. The covering yarn is made of aliphatic polyamide, in particular nylon 66.

This solution however results especially disadvantageous as it easily deteriorates and causes several failures of the belts, in particular in high temperature conditions and in systems in which the belt continuously operates in contact with oil.

Research is ongoing to find alternative materials for the production of a cover cloth for drive belts, in particular toothed belts, which allow to obtain a simpler and more cost-effective configuration of the cloth that perfectly adheres to the surface of the teeth and that however allows to retain mechanical characteristics which are comparable or better than those of the known cloths.

Furthermore, the more restrictive standards on polluting emissions have led in recent years to the development of engines which reach increasingly higher temperatures within the engine compartment during operation.

The materials which are currently used for making the cover cloths, e.g. comprising simple yarns of nylon 66 in a longitudinal direction with respect to the belt, do not display an optimum behaviour at these high temperatures, both when the belts are used in dry conditions or in air and therefore not inside the block, and when they are used in oil systems and therefore inside the engine block.

Cover cloths are therefore sought, which are resistant at the high temperatures of currents engines both in dry conditions and in oil.

Furthermore, both when used in dry conditions and when used in oil or inside the engine block, the belts are subjected to attack by several chemical agents. In systems in which the belt is used in direct contact or partially immersed in oil, the engine oil is often contaminated by ethanol, fuel and diesel. In particular, contamination with fuel is detrimental. The fuel mixes with oil sometimes even in high percentages and dilutes the oil itself and attacks the materials forming the belt.

For instance, in some applications the oil may even comprise up to 30% fuel. The percentage of fuel varies according to the operative conditions of the engine and is higher with a high load and low temperature of the engine.

Furthermore, modern so-called ecological fuels are particularly aggressive as they contain several additives which attack the polyamide yarns of the cloth.

Cover cloths are therefore sought which are resistant to chemical agents, in particular at high temperatures.

JP2004270066 discloses a high-density woven fabric having functionalities such as flame retardance, chemical resistance, heat retaining property, etc., a soft feeling and bulkiness suitable as a uniform for a chemical operator and applicable in many different fields of the technique. This fabric comprises fibers of PPS.

JP2008190103 discloses a base fabric used for heat resistant composite members and excellent in heat resistance and stretchability. The fabric comprises fibers of PPS.

### OBJECT OF THE INVENTION

A first object of the present invention is therefore to obtain a toothed belt in which the toothing is covered by a cloth that has a simple structure which is resistant to high temperatures, both in dry conditions and in oil, is easy to produce and is cost-effective.

Another object of the present invention is to obtain a cover cloth that is resistant to chemical agents in particular to impurities present in the engine oil.

Another object of the present invention is to obtain a drive belt, in particular a toothed belt, that has a long life and therefore excellent mechanical, adhesion and meshing precision features.

Another object of the present invention is to obtain a drive system that comprises a toothed belt in which the surface of the teeth is covered with a cover cloth that is resistant to high temperatures and chemical agents.

According to the present invention, these objects are achieved by a toothed belt according to claim 1.

### BRIEF DESCRIPTION OF THE DRAWINGS

For a better understanding of the present invention, it is now also described with reference to the accompanying figures, in which:
- Figure 1 is a partial perspective view of a toothed belt according to the present invention;
- Figure 2 is a diagram of a first timing control system using a first toothed belt according to the present invention;
- Figure 3 is a diagram of a second timing control system using a second toothed belt according to the present invention;
- Figure 4 is a diagram of a third timing control system using a third toothed belt according to the present invention;

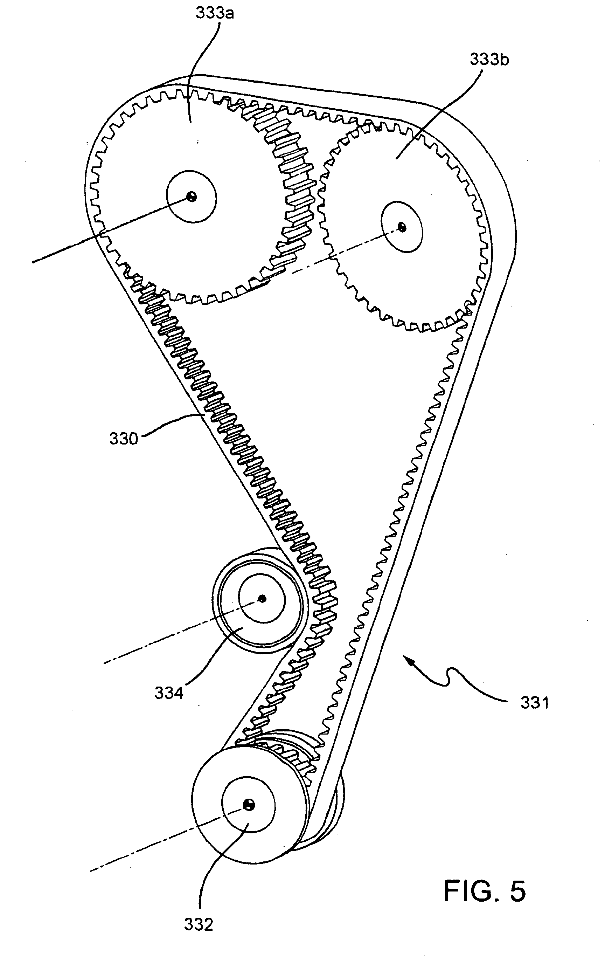

- Figure 5 is a diagram of a fourth timing control system using a fourth toothed belt according to the present invention;
- Figure 6 is a drive system used in tests for measuring the broadening of toothed belts according to the invention and according to the known art;
- Figure 7 is a diagram that shows the values of retained tensile strength at 150°C for 28 days in air measured for yarns made entirely of continuous PPS filaments compared with yarns made of polyamide 6.6;
- Figure 8 is a diagram that shows the values of retained tensile strength at 150°C for 28 days in oil mixed with 10% fuel measured for yarns made entirely of PPS filaments compared with yarns made of polyamide 6.6;
- Figure 9 is a diagram that shows the values of retained tensile strength at 150°C for 28 days in a mixture of 90:10 oil-biodiesel measured for yarns made entirely of PPS filaments compared with yarns made of polyamide 6.6;
- Figure 10 is a diagram that shows the values of retained tensile strength at 150°C for 28 days in a mixture of 90:10 oil-biodiesel measured for yarns made entirely of PPS filaments compared with yarns made of polyamide 6.6.

### DESCRIPTION OF THE INVENTION

Hereinafter, the expression "the elastomeric material substantially consists" means that the elastomeric material may comprise small percentages of other polymers or copolymers, which may be added to the elastomeric material without varying the physical-chemical features of the compound and therefore without departing from the scope of the present invention.

Hereinafter, the expression "additive for elastomeric material" means any material that is added to the elastomeric material to vary the physical-chemical features thereof.

Use "in oil" means that the belt is used partially immersed in an oil bath or in direct contact with oil. Generally, the belt in use is inside the engine block, for example as an alternative to chain or gear systems.

Use "in dry conditions" means that the belts are outside the engine block and are only accidentally in contact with the engine oil and are not generally in contact with fuel-mixed oil.

Use "in fuel-mixed oil" means that the toothed belt is used in a mixture of oil with percentages of fuel even over 30%.

The term "texturised" means that the cloth comprises a thermally and mechanically treated yarn so that the single filaments are permanently deformed so as to increase the elongability thereof.

The term "PPS" means polyphenylensulphide i.e. a polymer obtained from para-substituted benzene monomers and sulphur atoms.

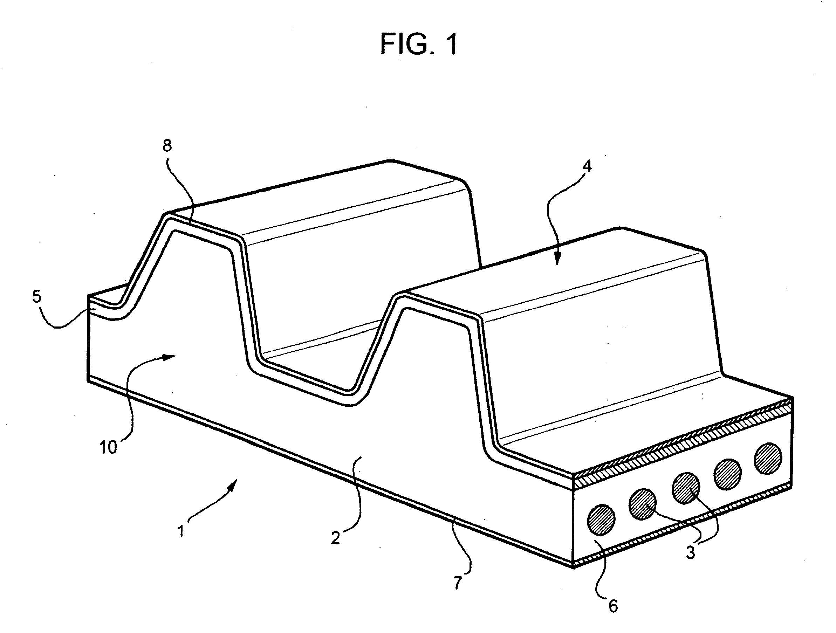

Figure 1 shows a toothed belt 1 as a whole. Belt 1 comprises a body 2 made of elastomeric material, in which a plurality of threadlike longitudinal reinforcing inserts 3 is imbedded.

Body 2 has a toothing 4, which is covered by means of a cover cloth 5. Cover cloth 5 may also be arranged on back 7 of the belt.

Cover cloth 5 of toothing 4 or the optional cover cloth of back 7 may comprise one or more layers and may be obtained by means of different weaving techniques, for example by means of the weaving technique known as 2x2 twill.

In a first embodiment, cover cloth 5 has a structure formed by a weft and a warp, in which at least the weft consists of filaments comprising polyphenylsulphide or PPS fibres.

Advantageously, the yarns comprise at least 50% PPS fibres and even more preferably can be entirely made of PPS.

Advantageously the PPS yarns are texturised.

Optionally also the warp is formed by warp yarns comprising PPS filaments.

In a second embodiment according to the present invention, cover cloth 5 has a composite structure consisting of a weft and a warp, in which at least the weft has a composite structure, i.e. consists of weft yarns each formed by a core elastic yarn and by a pair of composite yarns wound on the elastic yarn, each composite yarn comprises a high thermal and mechanical resistance yarn and at least one covering yarn wound on the high thermal and mechanical resistance yarn. The elastic yarn is made e.g. of polyurethane. The high thermal and mechanical resistance yarn is made e.g. of para-aromatic polyamide. The covering yarn is made of PPS, preferably of texturised PPS.

In a third embodiment according to the present invention cover cloth 5 has a structure consisting of a weft and a warp, in which at least the weft has a composite structure, i.e. consists of weft yarns each formed by a core elastic yarn on which a high thermal and mechanical resistance yarn is wound. A covering yarn is subsequently wound on the high thermal and mechanical resistance yarn. The elastic yarn is made e.g. of polyurethane. The high thermal and mechanical resistance yarn is made e.g. of para-aromatic polyamide. The covering yarn is made of PPS, preferably of texturised PPS.

In particular, by using the cloths of the above described second and third embodiments, the life of the belt is extended having at the same time an optimum resistance to high temperatures and to attacks by chemical agents and at the same time retaining optimum mechanical features.

All of the above disclosed cloths have shown optimum resistance to chemical agents and therefore to wear, in particular in dry conditions, as well as in oil and oil/diesel and oil/biodiesel mixtures.

Advantageously, the use of PPS fibres for making a cover cloth allows the use of simple and extremely cost-effective technologies.

Furthermore the use of PPS fibres allows the preparation of a more flat cloth that does not display the surface irregularities present in cloths of the known art.

The above disclosed cloths can also resist the high temperatures of engines which are being developed and can resist for the whole working life of the vehicle i.e. about 250,000 Kms within the engine block in an oil bath.

Cloth 5 is generally processed by a first treatment and a second treatment.

Advantageously, cloth 5 is processed by a first treatment with RFL.

Optionally, cloth 5 is subjected to a second treatment comprising a fluorinated plastomer, for instance PTFE, and an elastomer, for instance a material similar to that used for the body compound.

Advantageously, one or more copolymers formed from a nitrile group-containing monomer and by a diene are used.

The nitrile group-containing monomers are advantageously in a percentage in the range between 15 and 60 % with respect to total final copolymers.

More advantageously, the nitrile group-containing monomers are between 15 and 25 % in weight in cold applications with temperatures up to -40°C, between 33 and 39% in weight for belts applied in dry conditions and between 39 and 51% in weight for applications in oil.

Even more advantageously, for applications in oil they are between 49 and 51% in weight, for example 50% in weight, while for applications in dry conditions they are between 19 and 23% in weight, for example 21% in weight.

More advantageously, the copolymer/s used are nitrile rubbers, advantageously acrylonitrile butadiene rubbers, known as NBR. Even more advantageously, these are hydrogenated acrylonitrile butadiene, known as HNBR or even XHNBR, i.e. carboxylated hydrogenated acrylonitrile butadiene rubbers.

By appropriately selecting the amounts of materials, the second treatment may form a distinct covering layer separate from the cloth which, hereinafter, is also designates as resistant layer 8. Resistant layer 8 forms the working surface of the belt and therefore further increases the resistance to wear and avoids the absorption of oil.

Advantageously the fluorinated plastomer is present in the resistant layer in a greater amount than the second elastomeric material in terms of phr.

The thickness of resistant layer 8 is advantageously in the range between 0.03 mm and 0.2 mm.

Resistant layer 8 may be placed over cloth 5 in different manners. It is preferably placed by means of a calendaring step.

An adhesive material may be placed between cloth 5 and resistant layer 8 to improve the adhesion of resistant layer 8 on cloth 5.

Resistant layer 8 preferably has a weight in the range between 50 and 120 g/m² to ensure the required resistance.

Back 7 of the belt is preferably also covered by a cover cloth 5, which is the same as that previously disclosed.

Cover cloth 5 of back 7 may preferably also be covered by a resistant layer (not shown in the Figure). Even more preferably the resistant layer that covers cover cloth 5 of the back is identical to that covering cover cloth 5 of the teeth.

Advantageously, body 2 is made of a compound, also designated as body compound, that is formed by one or more elastomers.

Advantageously, the body compound comprises one or more copolymers formed from a nitrile group-containing monomer and from a diene.

Advantageously, the nitrile-group containing monomers are in a percentage similar to that of the body material.

The nitrile group-containing monomers are advantageously in a percentage in the range between 15 and 60 % with respect to total final copolymers.

More advantageously, the nitrile group-containing monomers are between 15 and 25 % in weight in cold applications with temperatures up to -40°C, between 33 and 39% in weight for belts applied in dry conditions and between 39 and 51% in weight for applications in oil.

More advantageously, the copolymer/s used are nitrile rubbers, advantageously acrylonitrile butadiene rubbers, known as NBR. Even more advantageously, these are hydrogenated acrylonitrile butadiene, known as HNBR or even XHNBR, i.e. carboxylated hydrogenated acrylonitrile butadiene rubbers.

Advantageously, the HNBR used for making drive systems, in which the belt is partially in an oil bath or in direct contact with oil and impurities, has a high degree of hydrogenation, for example so-called totally saturated HNBRs - thus having a residual percentage of double bonds of 0.9% at most - may be used, although HNBRs with a lower degree of unsaturation - such as for example HNBRs with a degree of saturation of 4% or 5.5%, so-called partially saturated HNBRs - may be used as an alternative.

Some examples of HNBR copolymers that may be used as body compound, but also in different treatments of the various components of the toothed belt, are copolymers included in the family of THERBAN produced by Lanxess, such as THERBAN 3407 with 34% of nitrile groups and a degree of hydrogenation of at most 0.9%, THERBAN 3406 with 34% of nitrile groups and a degree of unsaturation of at most 0.9%, THERBAN 3607 with 36% nitrile groups and a degree of unsaturation of at most 0.9 %, THERBAN 3446 with 34 % of nitrile groups and a degree of unsaturation of at most 4%, THERBAN 3447 with 34 % of nitrile groups and a degree of unsaturation of at most 5.5%. THERBAN 3627 with 36% nitrile groups and a degree of unsaturation of at most 2%, THERBAN 3629 with 36% of nitrile groups and a degree of unsaturation of at most 2%, THERBAN 3907 with 39% of nitrile groups and a degree of unsaturation of at most 0.9%.

HNBRs produced by Nippon Zeon by the name ZETPOL may also be used as an alternative. Specifically, ZETPOL 2000 with 36% of nitrile groups and a degree of unsaturation of at most 0.9%, ZETPOL 2000L with 36% of nitrile groups and a degree of unsaturation of at most 0.9%, ZETPOL 2010 with 36% of nitrile groups and a degree of unsaturation of at most 4%, ZETPOL 2010L with 36% of nitrile groups and a degree of unsaturation of at most 4%, ZETPOL 2010H with 36% of nitrile groups and a degree of unsaturation of at most 4%, ZETPOL 2020 with 36% of nitrile groups and a degree of unsaturation of at most 5.5%, ZETPOL 2020L with 36% of nitrile groups and a degree of unsaturation of at most 5.5%.

A polymer formed by a mixture of one or more copolymers obtained from a diene monomer and a nitrile group-containing monomer is used even more advantageously. One or more of such copolymers are advantageously added with an acid or a salt of an unsaturated carboxylic acid.

The unsaturated carboxylic acid is more advantageously methacrylic or acrylic acid and said salt is a zinc salt of methacrylic or acrylic acid.

A zinc salt of methacrylate acid is even more advantageously used.

The zinc salt of methacrylate acid is even more preferably added in an amount in the range between 10 and 60 phr.

For example, elastomers are advantageously used which are sold by Zeon with the names: ZSC 1295, ZSC 2095, ZSC 2195, ZSC 2295, ZSC 2295L, ZSC 2295R and ZSC 2395.

ZSC 2095 is more advantageously used.

In particular, the previously cited HNBRs, i.e. ZETPOL and/or THERBAN may partially or totally be replaced with a ZSC that comprises an unsaturated carboxylic acid and a zinc oxide and/or with THERBAN ART which comprises a salt of the unsaturated carboxylic acid.

Alternatively, NBR or HNBR polymers with a percentage of acrylonitrile between 15 and 25% are used for making drive systems in which the belt is used in dry conditions.

The compound in the first elastomeric material may contain other conventional additives such as, for example, reinforcing agents, fillers, pigments, stearic acid, accelerators, vulcanisation agents, antioxidants, activators, initiators, plasticisers, waxes, prevulcanisation inhibitors, anti-degrading agents, process oils and the like.

Advantageously, carbon black may be used as a filler, advantageously added in amounts in the range between 0 and 80 phr, more advantageously approximately 40 phr. Advantageously, reinforcing white fillers such as talc, calcium carbonate, silica and silicates are advantageously added in an amount in the range between 0 and 80 phr, advantageously approximately 40 phr. Silanes may also advantageously be used in an amount in the range between 0 and 5 phr.

Advantageously, zinc oxide and magnesium oxide are added in an amount advantageously in the range between 0 and 15 phr.

Advantageously, ester plasticisers such as trimellitates or ether esters are added in an amount advantageously in the range between 0 and 20 phr.

Vulcanisation coagents such as triallylcyanurates, organic or inorganic methacrylates such as metal salts are advantageously added in an amount advantageously in the range between 0 and 20 phr or organic peroxides such as for example isopropyl benzene peroxide in an amount advantageously in the range between 0 and 15 phr.

Resistant inserts 3, also designated as cords, made of a material selected from the group consisting of glass fibres, aramidic fibres, carbon fibres, PBO fibres may advantageously be used. Furthermore, cords of the so-called "hybrid" type may also be used, i.e. comprising filaments made of different materials, advantageously selected among those previously mentioned.

The cord is preferably made of high modulus glass fibres, for instance in a 22.5 3x18 configuration.

The fibres forming the cord are preferably treated with an HNBR latex vulcanised with hydrosoluble peroxides by means of the process disclosed in patent WO2004057099 to Nippon Glass.

A toothed belt 1 according to the present invention is made by using known production processes.

The belts according to the present invention are suitable for systems in direct contact with oil or partially immersed in oil, in particular high temperature engine oil, such as those used in recently developed engines, for example even at more than 130°C. Specifically, optimal results have been achieved in the case in which the belt is used instead of the traditional gear or chain systems inside the block, systems in which the belt is exposed for its whole lifetime to a continuous contact with oil splashes or possibly even partially immersed in an oil bath.

In this case, the first and/or the second treatment are advantageously also carried out on back 7, when a cover cloth 5 for covering the back is present. In this case, treatment 8 allows to avoid the penetration of oil even on the side of back 7 of toothed belt 1 and results especially advantageous when toothed belt 1 is used in control systems in which back 7 of the belt is in contact with shoes or tensioners. As a matter a fact, in these systems oil remains interposed between the contact surface of the shoe or the tensioner with the belt and the back of the belt itself and therefore the penetration within the compound forming the body would be promoted.

Toothed belt 1 may preferably be treated on all outer surfaces and, in particular, on sides 10 where the body compound is more exposed to the attack of oil, with a swelling resistant rubber, for instance ENDURLAST (Lord registered trademark).

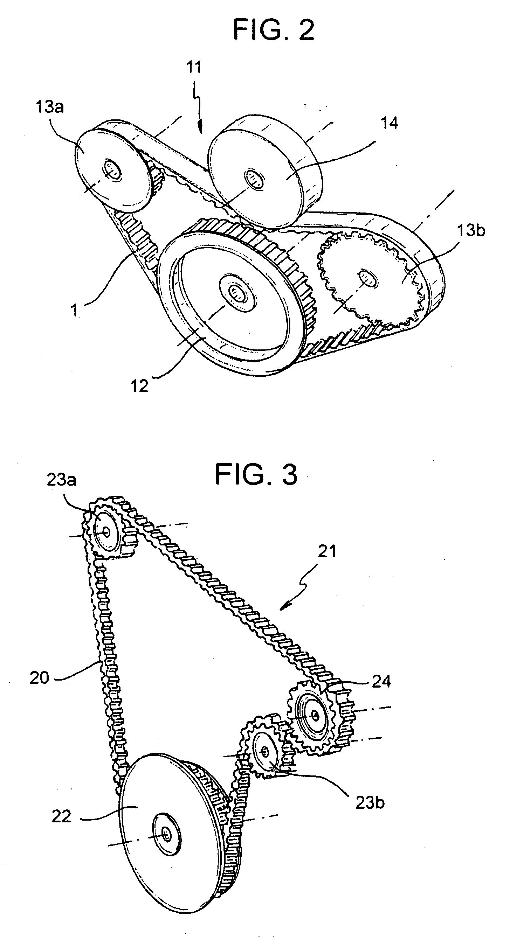

Belt 1 according to the present invention may be used, for instance, in a timing control system for a motor vehicle of the type shown in Figure 2. The timing control system is indicated in the Figure as a whole by numeral 11 and comprises a driving pulley 12 rigidly fixed to the drive shat (not shown), a first and a second driven pulley (13a, 13b) and a tensioner 14 for the tensioning of the toothed belt.

According to a second alternative embodiment, shown in Figure 3, numeral 20 shows a toothed belt according to the present invention, which has a toothing on both faces and therefore displays a resistant cloth that covers both toothings.

Toothed belt 20 may be used, for instance, in a timing control system for a motor vehicle of the type shown in Figure 3. The timing control system is indicated in the Figure as a whole by numeral 21 and comprises a driving pulley 22 rigidly fixed to the drive shaft (not shown), a first, a second pulley and a third driven pulley (23a, 23b, 24).

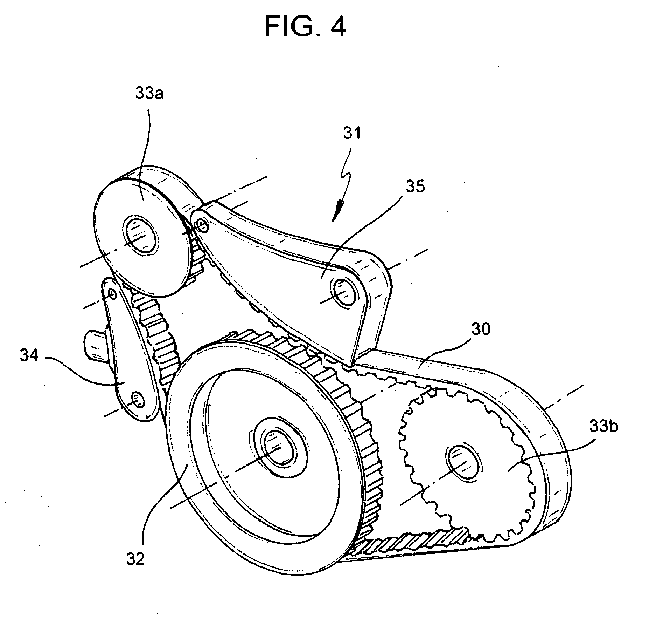

According to a third embodiment of the present invention, shown in Figure 4, a toothed belt 30 according to the present invention may advantageously be used in a timing control system shown as a whole as numeral 31 in the Figure and comprising a driving pulley 32 rigidly fixed to the drive shaft (not shown), a first and a second driven pulley (33a, 33b), a shoe tensioner 34 and a shoe 35.

In particular, the toothed belt of the present invention has been shown to be especially effective when used in a drive system commonly known as "balance shaft".

In use, toothed belts 1, 20 and 30 in respective control systems 11, 21 and 31 are in direct contact with the oil and inside the engine block.

Figures 2 and 4 refer to control systems relative to the handling of balance countershafts, although it is clear that the toothed belt according to the present invention may also be used in so-called "cam to cam" systems or for the handling of the oil pump. In these cases, in use, the belt results partially immersed in an oil bath.

Furthermore, the belt according to the present invention may also be used in the main drive for the handling of the cams and also for the handling of the injection pump in diesel engines.

Alternatively, the belt according to the present invention may also be used as a timing belt in dry conditions.

For example the belt according to the present invention may advantageously be used in a timing control system indicated in the figure as a whole by numeral 331, which comprises a drive pulley 332 rigidly fixed to the drive shaft (not shown), a first 333a and a second 333b driven pulley, a tensioner 334.

In this embodiment the belt according to the present invention is used in dry conditions.

It has experimentally been verified that the use of the cloth according to the present invention allows to obtain an effective resistance to oil even at high temperatures and therefore enables the toothed belts to pass the duration tests which they undergo for use in motor vehicles therefore avoiding all the problems of the known toothed belts when used in contact with oil, in particular reduction of the mechanical characteristics, reduced adhesion, less efficient meshing and less resistance to wear.

Furthermore the belt of the present invention may be used as a belt in dry conditions in timing control systems at high temperatures which can even exceed 130°C.

From an analysis of the characteristics of the toothed belt made according to the present invention, the advantages it allows to obtain are apparent. Therefore, the above disclosed belts may advantageously be used for applications at high temperatures both in dry conditions and in oil even in the presence of contaminants, for example ecological fuels, which are particularly aggressive.

While some embodiments have been disclosed by way of illustration of the invention, it is apparent that the skilled in the art may make modifications to the kind of fibres and to the materials forming it, as well as to the materials of the body compound and of the other components of the toothed belt without departing from the scope of the present invention. The cloth and the toothed belt according to the present invention will now also be described by means of examples without because of this being limited thereby.

### EXAMPLES

### Example 1

Yarns made entirely of texturised PPS fibres according to the invention were tested for breaking load in air, oil, and 90:10 mixtures at 150°C for 28 days.

- The materials used were oil (5W30 Mobil 1 - 5W-30 ESP Formula), diesel (Shell Ultra Low Sulphur Diesel), biodiesel (rapeseed methylester).

The tests were run in sealed 200 ml tubes containing oil and contaminants with an oil to fibre ratio of 150:5. The tubes were places in an oven for 28 days. At the end of the test, the oil was removed and the samples were washed with "petroleum spirit" which is also known as white spirit at 40-60°C and dried before measuring the breaking load.

The results were compared with the data obtained with a cloth comprising a weft of polyamide 6.6 yarns for making cover cloths for drive belts.

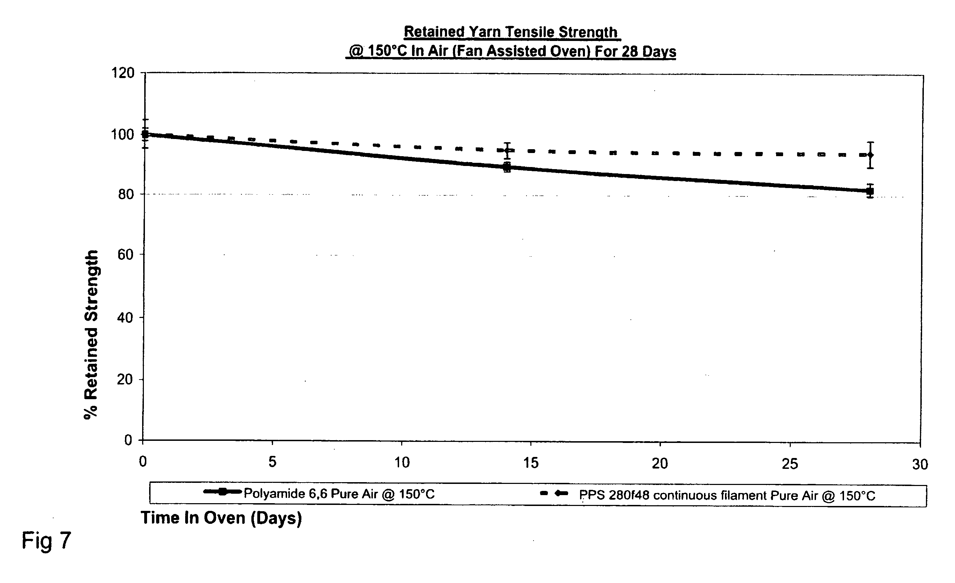

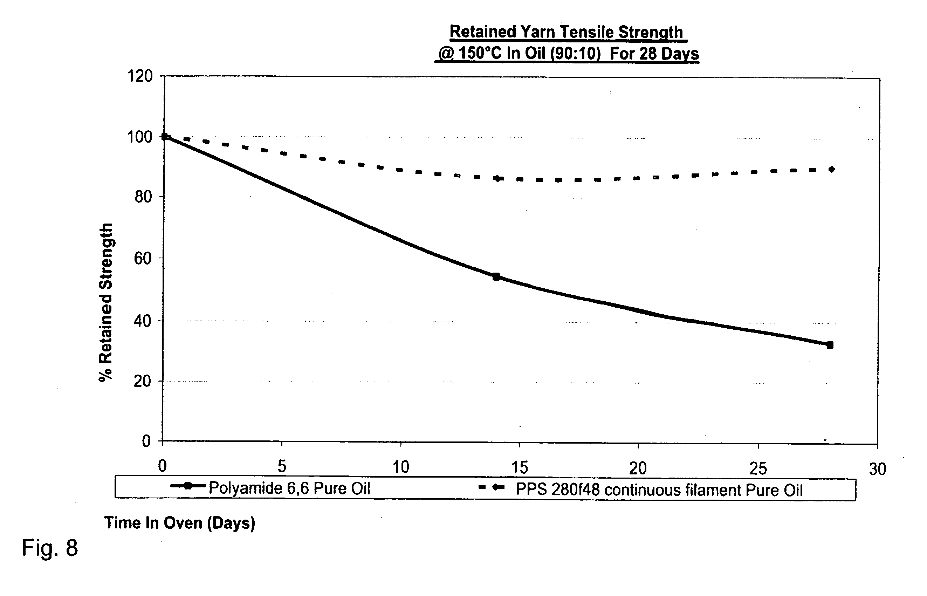

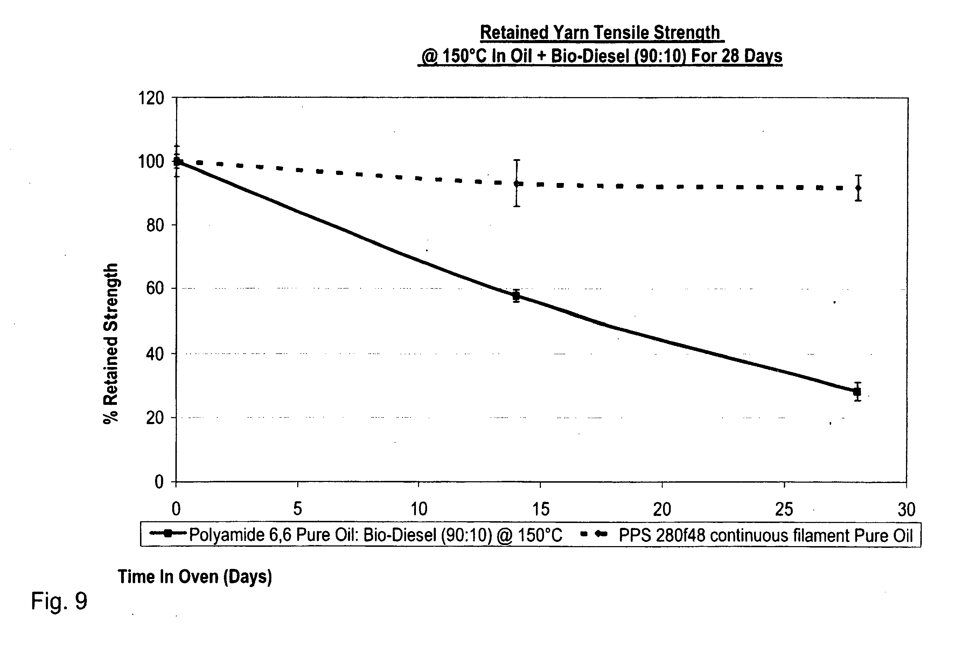

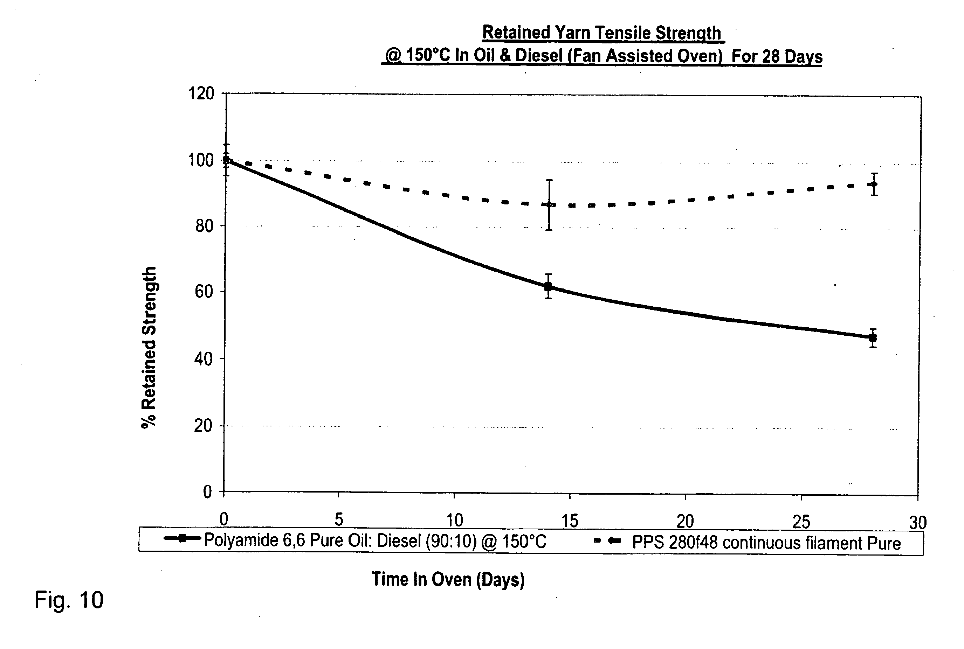

The results of the comparative tests are shown in Figures 7 to 10.

As may be noted in Figures 7-10, PPS shows values of retained tensile strength much higher than those measured for commonly used polyamide 6.6.

Furthermore, PPS compared with the polyamide 6.6 fibres advantageously allows to considerably reduce production costs.

### Example 2

Table 1 shows an example of a cloth according to the invention that allows to obtain optimum results in terms of resistance to wear and to chemical agents. The cloth has a 2x2 twill configuration and a structure formed by a weft and warp having the features shown in Table 1.

**Table 1**

| Cloth | | |
|---|---|---|
| Cloth weight | [g/m2] | 400 |
| Thickness | [mm] | 1,3 |

| Warp | | |
|---|---|---|
| Yarn material | | PA66HT |
| Yarn titre | [dtex] | 235 |
| Number of filaments | [n°] | 34 |
| Breaking load | [N/25mm] | 1300 |
| Breaking elongation | [%] | 25 |
| Number of warp yarns | [n°/25mm] | 80 |

| Weft | | |
|---|---|---|
| Yarn material | | Texturised PPS |
| Yarn titre | [dtex] | 258x3 |
| Number of filaments | [n°] | 48x3 |
| Breaking load | [N/25mm] | 2300 |
| Breaking elongation | [%] | 150 |
| El % at 100N/25mm | [%] | < 70 |
| Number of weft yarns | [n°/25mm] | 120 |

Table 2 shows an example of a cloth according to the known art. This cloth has a 2x2 twill configuration and a structure formed by a weft and warp having the features shown in Table 2.

**Table 2**

| Cloth | | |
|---|---|---|
| Cloth weight | [g/m2] | 400 |
| Thickness | [mm] | 1,3 |

| Warp | | |
|---|---|---|
| Yarn material | | PA66HT |
| Yarn titre | [dtex] | 235 |
| Number of filaments | [n°] | 34 |
| Breaking load | [N/25mm] | 1300 |
| Breaking elongation | [%] | 25 |
| Number of warp yarns | [n°/25mm] | 80 |

| Weft | | |
|---|---|---|
| Yarn material | | Texturised PA66HT |
| Yarn titre | [dtex] | 78x8 |
| Number of filaments | [n°] | 34x8 |
| Breaking load | [N/25mm] | 2200 |
| Breaking elongation | [%] | 150 |
| El % at 100N/25mm | % | < 70 |
| Number of weft yarns | [n°/25mm] | 120 |

### Example 3

Standard belts were tested. All belts comprise a body compound made of HNBR with 50% units of nitrile. The body compound is reinforced with 20 phr of reinforcement fibres in Teijn's 1 mm-long Technora fibres.

The cloth that covers the toothing has a 2*2 twill configuration and a structure consisting of a weft and warp, in which the weft consists in PA66 yarns according to table 2 for comparison and in PPS yarns according to the invention according to table 1. The cloth is subjected to a treatment with a spreading HNBR compound comprising 50 % nitrile units and a PTFE according to the compositions disclosed in EPl157813.

The cords are made of k glass.

The only difference between the belts is that in the known belts, the weft yarns of the cover cloth are made of PA66 while in the belt according to the invention the weft yarns are made of PIPS.

The verification test of the tooth breakage is carried out on the countershaft drive of the 2.0L AUDI FSI engine at 3000 rpm with 100% load carrying out test sessions of about 48 h after which the belt is extracted and the broadening thereof is measured, which provides a measurement of the amount of fuel-mixed oil absorbed on the belt.

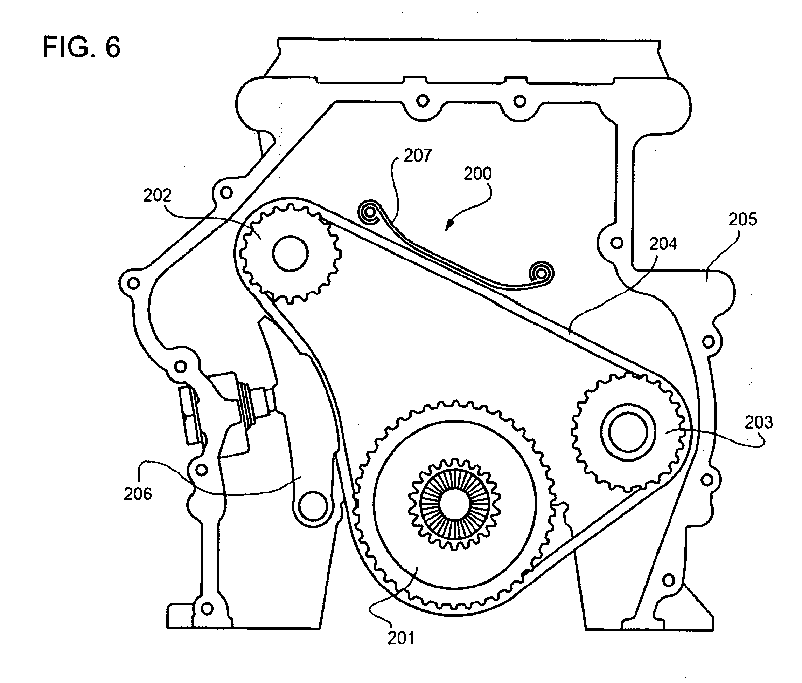

The drive system used is shown in figure 6 where it is indicated by number 200 and comprises a drive pulley 201, a countershaft pulley 202, a transmission pulley 203 and a toothed belt 204. The drive system is arranged within a block 205 and further comprises a shoe tensioner 206 and a spacer element 207.

The number of teeth of the pulleys which form the transmission system is shown in table 1.

| | | |
|---|---|---|
| Drive | [n°] | 42 |
| 1^{st} countershaft | [n°] | 21 |
| 2^{nd} countershaft | [n°] | 24 |

The belt is known as 084ROL100 and is a belt with 84 teeth having an 8-mm step and a 10-mm width.

The temperature of the oil is 80°C for the first 36 hours and then 120°C for the subsequent 12 h for each test session. The fuel concentration varies as a function of the test conditions.

Surprisingly, the toothed belts according to the invention have a delayed breakage of the teeth with respect to the comparison belts.

In particular, while the comparison belts comprising a cloth with texturised Nylon 66 yarns in the longitudinal direction has a tooth breakage after 476 hours, the belt according to the present invention has a tooth breakage after 762 hours.

Independently of the test used or of the drive system or of the various components that form the belt, a delayed tooth breakage is obtained.

## Claims

1. A toothed drive belt (1) comprising a body (2) made of a first elastomeric material, a toothing (4) and a plurality of threadlike longitudinal reinforcing inserts (3) embedded in the body of the belt and a back (7), said toothing is covered by a cover cloth (5) comprising yarns which extends in the longitudinal direction of the belts, **characterised in that** said yarns which extend longitudinally are each formed by an elastic core yarn on which at least a high thermal and mechanical resistance yarn is wound, a covering yarn is wound on said high thermal and mechanical resistance yarn, said covering yarn is made of PPS.

2. The drive belt (1) according to claim 1, **characterised in that** said elastic yarn is made of polyurethane.

3. The drive belt (1) according to claim 1 or 2, **characterised in that** said high thermal and mechanical resistance yarn is made of para-aromatic polyamide.

4. The drive belt (1) according to any of claims 1 to 3, **characterised in that** a pair of composite yarns, each consisting of a high thermal and mechanical resistance yarn on which said PPS covering yarn is wound, is wound on said core.

5. The belt according to claim 4, **characterised in that** said back (7) is covered by a cover cloth (5) according to any of the preceding claims.

6. The belt according to any of claims 1 to 5, **characterised in that** said first elastomeric material is obtained from a diene monomer and a nitrile-group containing monomer.

7. The belt according to claim 6, **characterised in that** said nitrile groups are in a percentage in the range between 39 and 51 % in weight.

8. The belt according to claim 6 or 7, **characterised in that** said first elastomeric material is selected from the group consisting of NBR, HNBR, XHNBR, or mixtures thereof.

9. The toothed belt according to claim 8, **characterised in that** said first elastomeric material comprises a polymer added with an unsaturated carboxylic acid and/or a salt of an unsaturated carboxylic acid.

10. The belt according to any of the preceding claims, **characterised in that** said fabric is subjected to a first treatment and to a second treatment.

11. The belt according to claim 10, **characterised in that** at least one of said first and second treatments comprises a fluorinated plastomer.

12. A timing control system for a motor vehicle comprising at least one drive pulley (12, 22, 32), a driven pulley (13a, 13b, 23a, 23b, 24, 33a, 33b), a toothed belt (1) according to any of claims 4 to 11.

13. The timing control system according to claim 12, comprising means adapted to maintain said belt continuously in contact with oil.

14. The timing control system according to claim 12 or 13, comprising an engine block 205, **characterised in that** said toothed belt (1) is positioned inside said engine block.

## Patentansprüche

1. Zahnriemen (1) umfassend einen Körper (2) aus einem ersten elastomeren Werkstoff, eine Zahnung (4) und eine Vielzahl fadenförmiger, längslaufender, Verstärkungseinlagen (3), eingebettet in den Körper des Riemen, und einen Rücken (7), wobei die Zahnung mit einem Umwindestoff (5), umfassend aus Fäden, die sich in Längsrichtung der Riemen erstrecken, **dadurch gekennzeichnet, dass** jeder der sich in Längsrichtung erstreckenden Fäden aus einem elastischen Kernfaden gebildet ist, um den wenigstens ein thermischer und mechanischer Hochwiderstandsfaden gewickelt ist, wobei ein Umwindefaden um den thermischen und mechanischen Hochwiderstandsfaden gewickelt ist, wobei der Umwindefaden aus PPS hergestellt.

2. Zahnriemen (1) nach Anspruch 1, **dadurch gekennzeichnet, dass** der elastische Faden aus Polyurethan hergestellt ist.

3. Zahnriemen (1) nach Anspruch 1 oder 2, **dadurch gekennzeichnet, dass** der thermische und mechanische Hochwiderstandsfaden aus paraaromatischem Polyamid hergestellt ist.

4. Zahnriemen (1) nach einem der Ansprüche 1 bis 3, **dadurch gekennzeichnet, dass** ein Paar Verbundfäden, jeder bestehend aus einem mit dem PPS Umwindefaden umwickelten thermischen und mechanischen Hochwiderstandsfaden, um den Kern gewickelt ist.

5. Zahnriemen nach Anspruch 4, **dadurch gekennzeichnet, dass** der Rücken (7) mit einem Umwindestoff (5) nach einem der vorangehenden Ansprüche bedeckt ist.

6. Zahnriemen nach einem der Ansprüche 1 bis 5, **dadurch gekennzeichnet, dass** der erste elastomere Werkstoff aus einem Dien-Monomer und einem eine NitrilGruppe enthaltendem Monomer erhalten ist.

7. Zahnriemen nach Anspruch 6, **dadurch gekennzeichnet, dass** der Gewichtsanteil der Nitril-Gruppen zwischen 39 und 51 % liegt.

8. Zahnriemen nach Anspruch 6 oder 7, **dadurch gekennzeichnet, dass** der erste elastomere Werkstoff aus der Gruppe bestehend aus NBR, HNBR, XHNBR oder aus Mischungen daraus ausgewählt ist.

9. Zahnriemen nach Anspruch 8, **dadurch gekennzeichnet, dass** der erste elastomere Werkstoff ein Polymer mit ungesättigter Carbonsäure und/oder ein Salz einer ungesättigten Carbonsäure umfasst.

10. Zahnriemen nach einem der vorangehenden Ansprüche, **dadurch gekennzeichnet, dass** das Textil einer ersten Bearbeitung und einer zweiten Bearbeitung unterzogen ist.

11. Zahnriemen nach Anspruch 10, **dadurch gekennzeichnet, dass** wenigstens eine Bearbeitung aus der ersten und der zweiten Bearbeitung ein fluoriertes Thermoplast umfasst.

12. Zeitpunkt-Steuersystem für ein Kraftfahrzeug, umfassend mindestens eine Antriebsriemenscheibe (12, 22, 32), eine getriebene Riemenscheibe (13a, 13b, 23a, 23b, 24, 33a, 33b), ein Zahnriemen (1) nach einem der Ansprüche 4 bis 11.

13. Zeitpunkt-Steuersystem nach Anspruch 12, enthaltend ein Mittel, das ausgestaltet ist, den Zahnriemen kontinuierlich in Kontakt mit Öl zu halten.

14. Zeitpunkt-Steuersystem nach Anspruch 12 oder 13, umfassend einen Motorblock (205), **dadurch gekennzeichnet, dass** der Zahnriemen (1) innerhalb des Motorblocks positioniert ist.

## Revendications

1. Courroie d'entraînement dentée (1) comprenant un corps (2) fait d'un premier matériau élastomère, une dent (4) et une pluralité de pièces rapportées de renfort longitudinales filiformes (3) intégrées dans le corps de la courroie et un revers (7), ladite dent est couverte par un tissu de recouvrement (5) comprenant des fils qui s'étendent dans la direction longitudinale des courroies, **caractérisée en ce que** lesdits fils qui s'étendent longitudinalement sont chacun formés par un fil d'âme élastique sur lequel au moins un fil à haute résistance thermique et mécanique est enroulé, un fil de recouvrement est enroulé sur ledit fil à haute résistance thermique et mécanique, ledit fil de recouvrement est fait de PPS.

2. Courroie d'entraînement (1) selon la revendication 1, **caractérisée en ce que** ledit fil élastique est fait de polyuréthane.

3. Courroie d'entraînement (1) selon la revendication 1 ou 2, **caractérisée en ce que** ledit fil à haute résistance thermique et mécanique est fait d'un polyamide para-aromatique.

4. Courroie d'entraînement (1) selon l'une quelconque des revendications 1 à 3, **caractérisée en ce qu'**une paire de fils composites, chacun constitué d'un fil à haute résistance thermique et mécanique sur lequel ledit fil de recouvrement en PPS est enroulé, est enroulée sur ladite âme.

5. Courroie selon la revendication 4, **caractérisée en ce que** ledit revers (7) est couvert par un tissu de recouvrement (5) selon l'une quelconque des revendications précédentes.

6. Courroie selon l'une quelconque des revendications 1 à 5, **caractérisée en ce que** ledit premier matériau élastomère est obtenu à partir d'un monomère de diène et d'un monomère contenant un groupe nitrile.

7. Courroie selon la revendication 6, **caractérisée en ce que** lesdits groupes nitrile sont présents suivant un pourcentage dans la plage entre 39 et 51 % en poids.

8. Courroie selon la revendication 6 ou 7, **caractérisée en ce que** ledit premier matériau élastomère est sélectionné à partir du groupe constitué de NBR, HNBR, XHNBR, ou de mélanges de ceux-ci.

9. Courroie dentée selon la revendication 8, **caractérisée en ce que** ledit premier matériau élastomère comprend un polymère additionné d'un acide carboxylique non saturé et/ou d'un sel d'un acide carboxylique non saturé.

10. Courroie selon l'une quelconque des revendications précédentes, **caractérisée en ce que** ledit tissu est soumis à un premier traitement et à un deuxième traitement.

11. Courroie selon la revendication 10, **caractérisée en ce qu'**au moins un desdits premier et deuxième traitements comprend un plastomère fluoré.

12. Système de commande de synchronisation pour un véhicule à moteur comprenant au moins une poulie d'entraînement (12, 22, 32), une poulie entraînée (13a, 13b, 23a, 23b, 24, 33a, 33b), une courroie dentée (1) selon l'une quelconque des revendications 4 à 11.

13. Système de commande de synchronisation selon la revendication 12, comprenant un moyen conçu pour maintenir ladite courroie continuellement en contact avec de l'huile.

14. Système de commande de synchronisation selon la revendication 12 ou 13, comprenant un bloc-moteur 205, **caractérisé en ce que** ladite courroie dentée (1) est positionnée à l'intérieur dudit bloc-moteur.
